# FASCICULE DE BREVET EUROPEEN

(11) **EP 2 782 741 B1**
(45) Date de publication et mention de la délivrance du brevet: **14.10.2020**
(21) Numéro de dépôt: 12806539.8
(22) Date de dépôt: 20.11.2012
(51) Int. Cl.: B29C 49/64, B29C 49/68, B29B 13/02, B29C 35/08, B23K 26/352

(54) **UNITÉ DE TRAITEMENT THERMIQUE D'ÉBAUCHES DE RÉCIPIENTS À DOUBLE PAROI RAYONNANTE EN QUINCONCE**
EINHEIT ZUR WÄRMEBEHANDLUNG VON BEHÄLTERVORFORMLINGEN MIT DOPPELTEN WÄNDEN MIT VERSETZTER EMISSIONSKONFIGURATION
UNIT FOR HEAT TREATING CONTAINER PREFORMS WITH DOUBLE WALLS RADIATING IN A STAGGERED CONFIGURATION

(30) Priorité: 21.11.2011 FR 1160594
(43) Date de publication de la demande: 01.10.2014
(73) Titulaire: Sidel Participations, 76930 Octeville-sur-Mer (FR)
(72) Inventeur: BELLEC, Caroline, F-76930 Octeville Sur Mer (FR); FEUILLOLEY, Guy, F-76930 Octeville Sur Mer (FR); MAILLOT, Isabelle, F-76930 Octeville Sur Mer (FR)
(74) Mandataire: Sidel Group
(86) Numéro de dépôt international: PCT/FR2012/052673
(87) Numéro de publication internationale: WO 2013/076415

(56) Documents cités:
- EP-A1- 2 425 959
- DE-A1-102009 026 259
- FR-A1- 2 878 185
- FR-A1- 2 915 418
- US-A- 5 980 229
- US-A1- 2010 089 906

## Description

L'invention a trait à la fabrication de corps creux tels que des récipients, par soufflage ou étirage-soufflage à partir d'ébauches en matière plastique, le terme « ébauche » désignant une préforme, obtenue par injection d'une matière plastique dans un moule, ou un corps creux intermédiaire obtenu à partir d'une préforme ayant subi au moins une première opération de formage et destiné à en subir au moins une seconde.

L'invention concerne plus précisément le traitement thermique des ébauches, généralement réalisé au défilé au sein d'une unité de traitement couramment appelée « four », équipée d'une pluralité de sources de rayonnement électromagnétique devant lesquelles défilent les ébauches entraînées en rotation sur elles-mêmes.

Une technique classique de chauffe consiste à employer des lampes tubulaires à incandescence de type halogène, rayonnant suivant la loi de Planck sur un spectre continu.

Cette technique, extrêmement répandue, ne va pas sans inconvénient, le principal étant que, pour l'essentiel, l'énergie électrique consommée par les lampes est tout bonnement gaspillée par dissipation thermique, seul le domaine infrarouge du spectre étant effectivement utile à la chauffe. C'est la raison pour laquelle le rendement des fours halogènes est très faible. Un autre inconvénient est le manque de précision de la chauffe, les lampes halogènes n'étant pas directives, même si des artefacts (miroirs, obturateurs) peuvent être employés pour tenter de concentrer localement le rayonnement absorbé par les ébauches.

Une technologie alternative a récemment vu le jour, basée sur l'utilisation de lasers émettant dans le domaine de l'infrarouge (cf. les demandes de brevet français n° FR 2 878 185 et FR 2 915 418 au nom de la demanderesse).

Le rendement et les propriétés (notamment de précision optique) des sources laser sont très supérieurs à ceux des sources halogènes, et permettent en théorie de réaliser une chauffe plus rapide et plus sélective des ébauches.

Les seules qualités intrinsèques des sources laser connues à ce jour ne suffisent cependant pas à garantir une chauffe des ébauches avec un bon rendement et une bonne homogénéité, et il demeure à cet effet indispensable de travailler sur l'architecture de l'unité de chauffe.

Des configurations nouvelles d'unités de chauffe ont été proposées, cf. par exemple la demande de brevet européen EP 2 002 962, qui propose d'incliner les sources directives par rapport à la tangente à la trajectoire des ébauches.

Une autre configuration d'uniformisation est présentée dans le document DE 10 2009 026259.

Un premier objectif est d'assurer une bonne distribution énergétique dans l'enceinte de traitement.

Un deuxième objectif est d'améliorer le rendement d'une unité de traitement d'ébauches.

Un troisième objectif est de proposer une unité de traitement d'ébauches présentant une bonne compacité.

Pour remplir au moins l'un de ces objectifs, il est proposé une unité de traitement d'ébauches de corps creux en matière plastique conformément aux caractéristiques de la revendication 1.

Des essais menés avec une telle configuration ont démontré que celle-ci permet d'obtenir la distribution énergétique souhaitée dans la zone d'exposition des ébauches. En particulier, lorsqu'un traitement homogène est souhaité, cette configuration permet d'obtenir une puissance homogène du rayonnement dans la zone d'exposition des ébauches. En outre, cette configuration présente une bonne compacité, et un bon rendement énergétique.

Les caractéristiques supplémentaires suivantes peuvent être prévues, seules ou en combinaison :
- l'unité de traitement comprend des moyens d'entraînement des ébauches sur au moins deux rangées parallèles au sein de l'enceinte ;
- l'unité de traitement comprend des moyens d'entraînement des ébauches sur deux rangées sont disposées en quinconce ;
- chaque émetteur présente une largeur sensiblement égale ou supérieure à celle de la section réfléchissante qui lui fait face.
- chaque paroi comprend une juxtaposition de modules individuels comprenant chacun :
   - un émetteur matriciel ;
- pour un intervalle donné entre deux émetteurs adjacents, les émetteurs de la deuxième paroi sont décalés, par rapport à ceux de la première paroi, d'un demi-intervalle augmenté ou diminué d'une demi-largeur de réflecteur, ou
- pour un intervalle donné entre deux émetteurs adjacents, les émetteurs de la deuxième paroi sont décalés, par rapport à ceux de la première paroi, d'un demi-intervalle ;
- les sources de rayonnement sont des lasers, par exemple des diodes laser de type VCSEL.

D'autres objets et avantages de ladivulgation apparaîtront à la lumière de la description de modes de réalisation donnés à titre illustratif, faite ci-après en référence aux dessins annexés dans lesquels :
- la figure 1 est une vue de côté montrant une unité de traitement thermique de préformes, selon un premier exemple de réalisation ;
- la figure 2 est une vue en coupe horizontale de l'unité de traitement thermique de la figure 1, selon le plan de coupe II-II ;
- la figure 3 est une vue de côté montrant une unité de traitement thermique de préformes, selon un deuxième exemple de réalisation ;
- la figure 4 est une vue en coupe horizontale de l'unité de traitement thermique de la figure 3, selon le plan de coupe IV-IV ;
- la figure 5 est une vue en perspective d'une paroi d'une unité de traitement telle que représentée sur les figures précédentes ;
- la figure 6 est une vue de détail de la paroi de la figure 5, selon l'encart VI.

On a schématiquement représenté sur les figures une unité **1** de traitement d'ébauches **2** de récipients au défilé. Les ébauches **2** sont en l'occurrence des préformes, mais il pourrait s'agir de récipients intermédiaires ayant subi des opérations temporaires de formage et destinés à subir une ou plusieurs opérations définitives pour l'obtention des récipients définitifs. De même, le traitement est en l'espèce un traitement thermique effectué par rayonnement dans l'infrarouge mais il pourrait s'agir d'un traitement de décontamination effectué par rayonnement dans l'ultraviolet.

Les préformes **2** sont représentées orientées col en haut, mais elles pourraient être orientées col en bas.

Comme cela est visible sur les figures, l'unité **1** de traitement deux parois opposées, à savoir une prémière paroi **3** et une deuxième paroi **4** en regard de la premièr paroi **3** qui définissent ensemble une enceinte **5** au sein de laquelle défilent les préformes **2** selon un trajet **T** prédéterminé définissant une direction longitudinale. Dans l'exemple illustré ce trajet **T** est linéaire, mais il pourrait être (au moins localement) courbe, selon la configuration des lieux dans lesquels est installée l'unité **1** de traitement.

Les préformes **2** sont fixées à des supports **6** pivotants appelés tournettes (schématisées par des cylindres), qui entraînent les préformes **2** en rotation autour de leur axe principal de manière à exposer le corps (c'est-à-dire la partie sous col) au traitement.

Selon un mode de réalisation connu, les tournettes **6** sont montées sur une chaîne entraînée en déplacement le long du trajet **T,** et sont solidaires chacune d'un pignon qui engrène une crémaillère fixe, de sorte que chaque préforme **2** est également entraînée en rotation autour de son axe de révolution au fur et à mesure de son déplacement le long du trajet **T.**

Tout autre moyen d'entraînement des tournettes en rotation peut être employé. A titre d'exemple, cette rotation peut être motorisée, par exemple au moyen d'un moteur individuel pour chaque tournette, ou au moyen d'un moteur commun dont la rotation est transmise aux tournettes par une transmission appropriée, par exemple par chaîne ou par courroie. Une telle motorisation présente l'avantage de permettre une rotation plus rapide des préformes **2** au sein de l'unité **1** de traitement, ce qui peut se révéler opportun compte tenu de la compacité de celle-ci.

Chaque paroi **3, 4** est à la fois émettrice et réfléchissante, et comprend une série d'émetteurs **7** matriciels juxtaposés comprenant chacun une pluralité de sources de rayonnement électromagnétique émettant de manière monochromatique (ou pseudo-monochromatique) dans le domaine infrarouge. On note **L1** la dimension longitudinale (ou largeur) de l'émetteur **7.**

En théorie, une source monochromatique est une source idéale émettant une onde sinusoïdale de fréquence unique. En d'autres termes, son spectre en fréquence est constitué d'une seule raie de largeur spectrale nulle (Dirac).

Dans la pratique, une telle source n'existe pas, une source réelle étant au mieux quasi-monochromatique, c'est-à-dire que son spectre en fréquence s'étend sur une bande de largeur spectrale faible mais non nulle, centrée sur une fréquence principale où l'intensité du rayonnement est maximale. Par abus de langage, on a toutefois coutume de qualifier une telle source réelle de monochromatique. Par ailleurs, on qualifie de « pseudo-monochromatique » une source émettant de manière quasi-monochromatique sur un spectre discret comprenant plusieurs bandes étroites centrées sur des fréquences principales distinctes. On parle également de source multimodes.

En pratique, les sources sont organisées par juxtaposition (c'est-à-dire les unes à côté des autres longitudinalement) et superposition (c'est-à-dire les unes au-dessus des autres) pour former une matrice. Il s'agit par exemple de sources laser, et de préférence de diodes laser. Selon un mode préféré de réalisation, chaque source est une diode laser à cavité verticale émettant par la surface (VCSEL), chaque diode émettant par exemple un faisceau laser d'une puissance unitaire nominale de l'ordre du milliWatt à une longueur d'onde située dans la plage des infrarouges courts et moyens - par exemple de l'ordre de 1 µm.

En pratique, la matrice est subdivisée en sous-ensembles **8** de diodes, que l'on a représentés de manière simplifiée sous forme de pavés, rassemblant chacun un nombre sensiblement équivalent de diodes.

Les émetteurs **7** sont juxtaposés (c'est-à-dire disposés côte à côte selon la direction longitudinale), en étant espacés les uns des autres, c'est-à-dire que leurs bords latéraux ne sont pas jointifs, un espace étant ménagé entre eux.

Chaque émetteur **7** définit un plan **M** médian vertical de symétrie, et l'on note **P** l'intervalle (constant dans le mode de réalisation illustré) entre deux émetteurs **7** voisins, défini comme la distance entre les plans **M** médians de ces émetteurs **7.**

Si, à l'échelle des préformes **2,** chaque diode peut être considérée comme une source ponctuelle émettant un pinceau lumineux conique, chaque émetteur **7** produit, lorsque toutes les diodes sont allumées, un halo de rayonnement infrarouge dont il est difficile de donner une représentation tant sont complexes les phénomènes optiques, en particulier d'interférence, et nombreuses les sources (plusieurs milliers par émetteur).

Quoi qu'il en soit, il demeure que l'intensité du halo de rayonnement produit par chaque émetteur présente un maximum centré autour d'un axe médian, et décroit avec l'éloignement de l'axe, tant horizontalement que verticalement.

Les émetteurs **7** étant juxtaposés longitudinalement, il va de soi que la distribution énergétique de chaque paroi **3, 4** est anisotrope à une distance donnée de la paroi **3, 4,** l'intensité du rayonnement pouvant être considérée comme sensiblement constante selon la direction longitudinale (tout en pouvant présenter, en pratique, des variations autour d'une intensité moyenne), tandis qu'elle décroît de part et d'autre aux extrémités longitudinales des parois **3** et **4.**

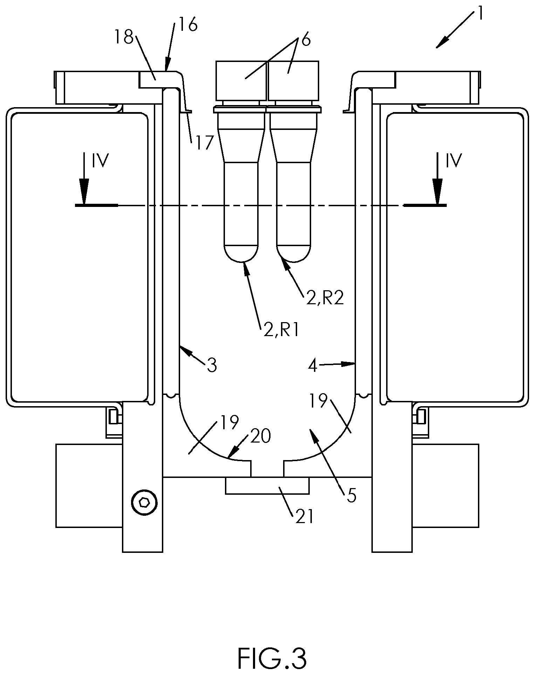

En pratique, comme cela est représenté sur la figure 3, chaque émetteur **7** est intégré à un module **9** individuel de chauffe qui comprend en outre un réflecteur **10** (propre à réfléchir la majorité du rayonnement des émetteurs **7),** ajouré, encadrant l'émetteur **7,** ainsi qu'un bloc **11** de refroidissement de l'émetteur **7,** comprenant des conduits **12** d'amenée et d'évacuation d'un fluide caloporteur.

Le réflecteur **10,** de contour rectangulaire, peut se présenter sous forme d'un miroir ayant, de manière classique, une glace présentant une face frontale polie et une face arrière revêtue d'un tain métallique. De préférence toutefois, afin d'éviter ou de minimiser les phénomènes de perte d'énergie optique, le réflecteur **10** peut être :
- soit de type spéculaire, sous forme d'une plaque réalisée dans un matériau métallique et dont une face frontale, tournée vers l'intérieur de l'enceinte, est polie, ou dans un matériau non nécessairement métallique (par exemple un verre ou une matière plastique résistant à la chaleur) et dont une face frontale est polie ou revêtue d'une couche mince à forte réflectivité, par exemple métallique (notamment argentée ou dorée),
- soit de type diffus, sous forme par exemple d'une plaque réalisée dans une céramique à haute réflectivité telle qu'une alumine frittée.

Chaque réflecteur **10** présente une section **13** inférieure, sensiblement rectangulaire, qui occupe l'espace sous l'émetteur **7,** surmontée de deux sections **14** supérieures qui bordent latéralement l'émetteur **7.**

Les modules **9** de chauffe sont juxtaposés de telle manière que les réflecteurs **10** de deux modules **9** adjacents soient aboutés, sans interstice entre les réflecteurs **10,** ou avec un interstice minimal juste suffisant pour permettre une éventuelle dilatation des réflecteurs **10** lors du fonctionnement de l'unité **1** de traitement, en fonction des cycles thermiques subis.

Les sections **14** supérieures de deux réflecteurs **10** adjacents forment conjointement une section **15** réfléchissante qui s'étend dans l'espace entre deux émetteurs **7** voisins, au même niveau et sur la même hauteur que ceux-ci. De préférence, chaque section **15** réfléchissante occupe tout l'espace entre les deux émetteurs **7** voisins, la largeur de cette section, notée **L2,** étant sensiblement égale à la distance entre les bords latéraux des émetteurs **7.** Compte tenu de la valeur minimale de l'interstice éventuel existant entre deux réflecteurs **10** voisins, la section **15** réfléchissante peut être considérée en première approximation comme continue, les effets de bord (c'est-à-dire les phénomènes optiques sur les bords latéraux des réflecteurs **10)** pouvant être minimisés. On peut toutefois, en seconde approximation, configurer l'unité **1** de traitement en tenant compte des effets de bord, comme nous le verrons ci-après.

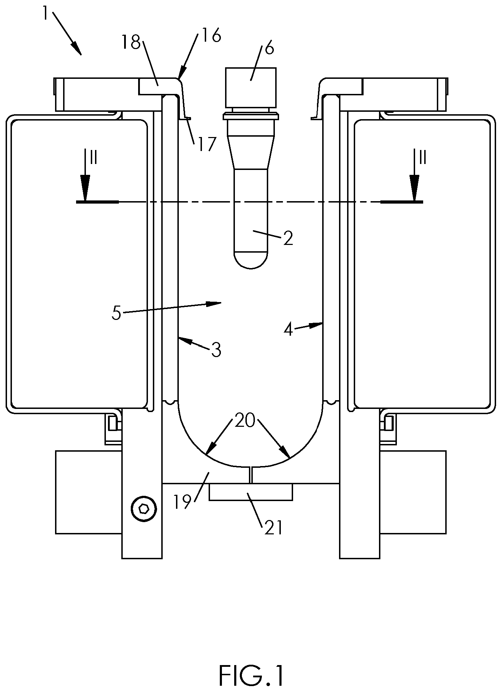

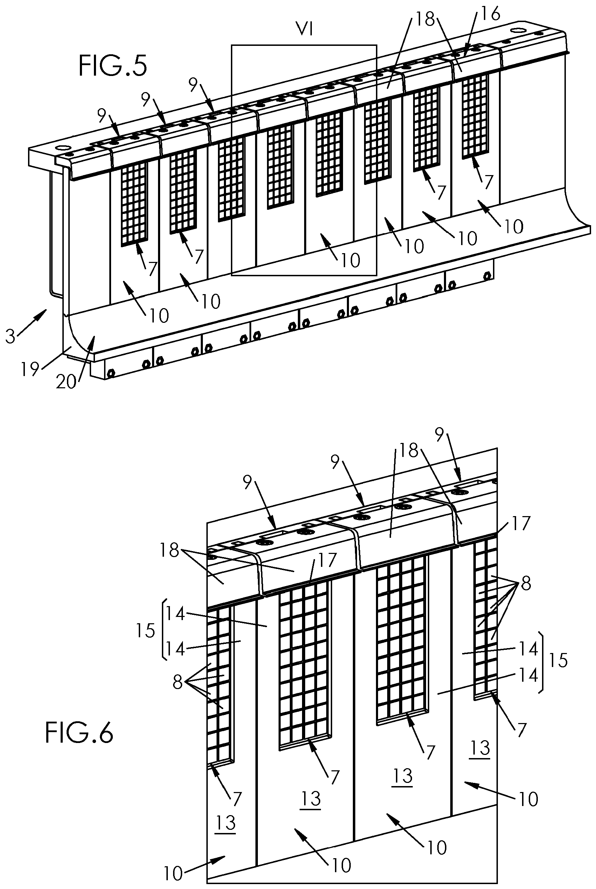

Comme on le voit sur les figures 1, 3 chaque paroi **3, 4** est surmontée d'un bandeau **16** limiteur, qui vient coiffer les émetteurs **7** pour limiter la propagation du rayonnement hors de l'enceinte **5.** Comme cela est bien visible sur la figure 1, le bandeau **16** présente un bec **17** en saillie qui borde les émetteurs **7** et dont une face inférieure, tournée vers l'enceinte, est réfléchissante pour concentrer le rayonnement dans celle-ci. En pratique, et comme illustré sur les figures **5 et 6**, le bandeau **16** est formé par juxtaposition d'éléments **18** individuels intégrés à chaque module **9** de chauffe.

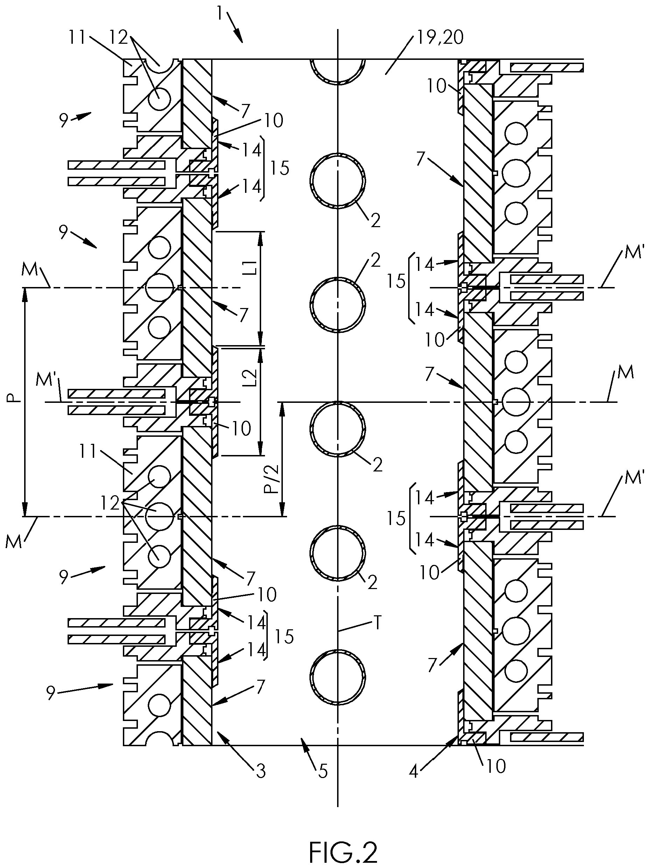

Comme on le voit sur la figure 2, les parois **3, 4** sont agencées de manière que les émetteurs **7** et les sections **15** réfléchissantes soient disposés en quinconce.

En effet, les émetteurs **7** de la deuxième paroi **4** sont décalés longitudinalement (c'est-à-dire le long du trajet **T** des préformes **2)** par rapport aux émetteurs **7** de la première paroi **3** de telle sorte que les émetteurs **7** de chaque paroi **3, 4** se trouvent face à une section **15** réfléchissante de la paroi opposée.

Selon un mode de réalisation illustré sur la figure 2, dans lequel les effets de bord sont négligés, ce décalage est égal à un demi-intervalle, soit P/2, de sorte que le plan **M** médian de chaque émetteur **7** soit confondu avec le plan (noté **M')** de joint entre deux réflecteurs **10** successifs de la paroi opposée.

Cette configuration peut être adoptée en l'absence de discontinuité à la jonction entre les modules **9** de chauffe ou, à tout le moins, lorsqu'une telle discontinuité est minime. En effet, une discontinuité importante entraînerait des défauts de réflexion du rayonnement dans la partie la plus énergétique de sa distribution spatiale (dans le plan **M).**

Pour minimiser un tel interstice (et donc les effets de bord), on pourrait compter sur un usinage et un aboutement précis des bords de réflecteurs **10** adjacents. Toutefois, comme cela est déjà évoqué, l'échauffement dans l'enceinte **5** peut provoquer une dilatation de la matière, qui nécessite la présence d'un tel interstice.

Une première solution peut consister à supprimer les effets de bord en prévoyant un réflecteur **10** unique pour deux modules **9** de chauffe adjacents, qui s'étendrait à cheval sur chacun d'eux, entre leurs émetteurs **7** respectifs. Dans une telle configuration, il n'existe plus d'interstice entre les modules **9** adjacents au niveau des réflecteurs.

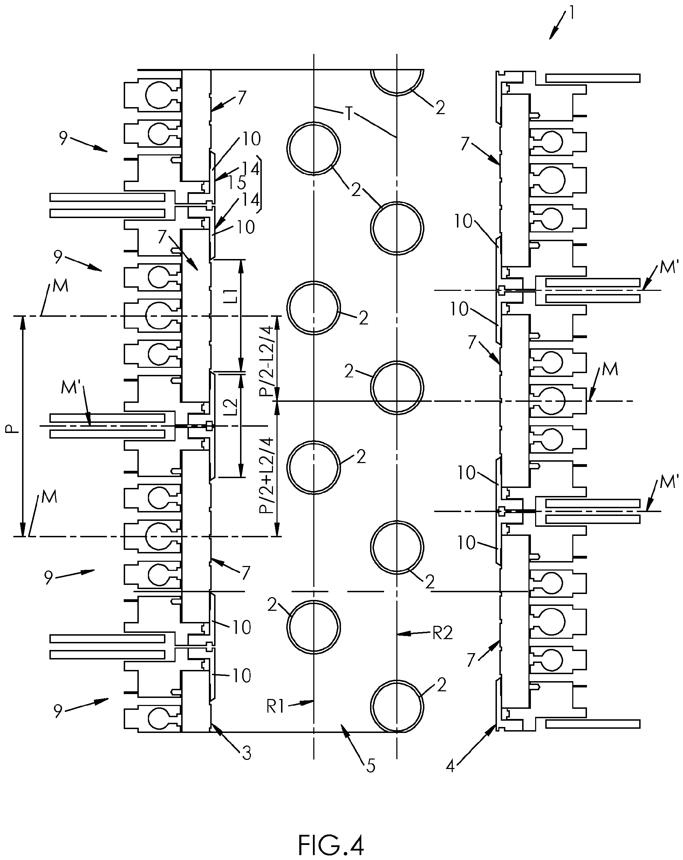

Une autre solution, qui préserve la réalisation individuelle de chaque module **9** équipé d'une paire de réflecteurs **10** de part et d'autre de l'émetteur **7,** consiste à décaler longitudinalement les émetteurs **7** de la deuxième paroi **4** par rapport aux émetteurs **7** de la première paroi d'une valeur telle que le plan **M** (où la concentration de rayonnement est maximale) s'étende dans l'axe d'une portion réfléchissante dépourvue de discontinuité, en étant par exemple confondu avec un plan **M** médian d'un réflecteur **10.** Une telle solution est illustrée sur la figure 4, qui montre un exemple de réalisation dans lequel le plan **M** médian de chaque émetteur **7** est non confondu avec le plan **M'** de joint entre deux réflecteurs **10** successifs, mais décalé de celui-ci d'une demi-largeur de réflecteur, soit L2/4. En d'autres termes, le décalage est égal à P/2 ± L2/4. Cette solution, qui ne néglige pas les effets de bord, en minimise toutefois les effets.

Par ailleurs, afin d'éviter toute zone d'ombre éventuelle dans l'enceinte **5,** la largeur **L1** des émetteurs est égale ou supérieure à la largeur **L2** de la section **15** réfléchissante qui lui fait face.

L'unité **1** de traitement peut comprendre un réflecteur **19** inférieur ayant une face **20** supérieure réfléchissante, tournée vers l'enceinte **5.** Le réflecteur **19** est par exemple conforme du type décrit dans la demande de brevet FR 2 954 920 (ou son équivalent international WO 2011/083263), c'est-à-dire qu'il présente une surface réfléchissante plane, laquelle peut être munie de trous mettant l'enceinte **5** en communication avec une chambre de piégeage du rayonnement.

Selon un mode de réalisation illustré sur les figures, le réflecteur **19** inférieur est concave (en forme de gouttière) et s'étend dans la continuité des parois **3, 4** qu'il relie entre elles pour fermer l'enceinte **5** et y concentrer le rayonnement en limitant la dispersion de celui-ci vers l'extérieur.

Comme on peut le voir sur les figures, le réflecteur **19** peut être réalisé en deux parties associées respectivement à chacune des parois **3, 4,** de sorte à permettre un écartement (ou un rapprochement) de celles-ci. Dans ce cas, pour éviter toute fuite du rayonnement, il est préférable de positionner sous le réflecteur **19** un réflecteur **21** secondaire sous-jacent, qui assure le comblement de l'interstice entre les deux parties écartées du réflecteur **19.** Cette disposition permet de régler la largeur de l'enceinte **5** pour l'adapter à des préformes **2** de différentes diamètres, ou au défilement de préformes **2** sur plusieurs rangées parallèles, comme illustré sur les figures 3 et 4.

Dans l'exemple de réalisation illustré sur les figures 3 et 4, les préformes **2** défilent en effet sur plusieurs (en l'espèce deux) rangées **R1, R2** parallèles, suivant la même direction longitudinale, de préférence suivant un agencement en quinconce. L'écartement transversal entre les rangées **R1, R2,** et l'écartement longitudinal entre les préformes **2** peut être ajusté en fonction notamment du diamètre des préformes **2.** L'entraînement des préformes **2** sur deux rangées peut être similaire à celui des préformes **2** sur une rangée unique, les tournettes étant simplement disposées en quinconce sur deux rangées parallèles.

La configuration en vis-à-vis des deux parois **3, 4** émettrices est particulièrement appropriée à un défilement des préformes **2** sur au moins deux rangées agencées en quinconce. En effet, cette configuration permet d'effectuer une chauffe symétrique des préformes **2** des deux rangées, avec une même distribution spatiale du rayonnement, et in fine un même profil thermique sur l'ensemble des préformes **2** à la sortie de l'unité **1** de traitement.

La configuration de l'unité **1** de traitement qui vient d'être décrite présente les avantages suivants.

Premièrement, l'unité **1** de traitement présente une bonne compacité, grâce aux deux parois **3, 4** émettrices en regard. A nombre d'émetteurs égaux, l'unité **1** de traitement est environ deux fois plus compacte qu'une unité de traitement de puissance équivalente équipée d'une unique paroi émettrice.

Deuxièmement, en corollaire de la compacité de l'unité **1** de traitement, le temps de traitement des préformes **2** est réduit, à vitesse de défilement égale.

Troisièmement, grâce au décalage des émetteurs des parois **3, 4** en regard, le rayonnement auquel sont soumises les préformes **2** présente de faibles variations d'irradiance (c'est-à-dire de puissance du rayonnement par unité de surface transversale à la direction générale du rayonnement). Il en résulte une bonne homogénéité de chauffe.

Quatrièmement, dans le cas de préformes **2** disposées sur deux rangées **R1, R2** parallèles, on augmente la capacité de production de l'unité **1** de traitement, et l'on augmente le rendement optique de celle-ci grâce à un important taux de remplissage de l'enceinte **5.**

## Revendications

1. Unité **(1)** de traitement d'ébauches **(2)** de corps creux en matière plastique, comprenant une enceinte **(5)** munie de deux parois **(3, 4)** opposées, à savoir une première paroi **(3)** et une deuxième paroi **(4)** en regard de la première paroi (3), qui définissent ensemble l'enceinte **(5)** au sein de laquelle défilent les ébauches **(2)** selon un trajet **(T)** longitudinal prédéterminé, unité dans laquelle :
chaque paroi **(3, 4)** comporte une série d'émetteurs **(7)** espacés comprenant chacun une pluralité de sources de rayonnement électromagnétique monochromatique ou pseudo-monochromatique,
une section **(15)** réfléchissante s'étend dans chaque espace entre deux émetteurs **(7)** voisins ;
les émetteurs **(7)** de la deuxième paroi **(4)** sont décalés longitudinalement par rapport à ceux de la première paroi **(3),** de sorte que les émetteurs **(7)** de chaque paroi **(3, 4)** font face à une section **(15)** réfléchissante de la paroi opposée ;
chaque émetteur (7) est intégré à un module (9) individuel de chauffe qui comprend un réflecteur (10) ajouré encadrant l'émetteur (7).

2. Unité de traitement selon la revendication 1, **caractérisée** en ce les modules (9) de chauffe sont juxtaposés de telle manière que les réflecteurs (10) de deux modules (9) adjacents soient aboutés.

3. Unité de traitement selon la revendication 1 ou 2, **caractérisée en ce qu'**elle comprend des moyens d'entraînement des ébauches **(2)** sur au moins deux rangées **(R1, R2)** parallèles au sein de l'enceinte **(5).**

4. Unité de traitement selon la revendication 3, **caractérisée en ce qu'**elle comprend des moyens d'entraînement des ébauches **(2)** sur deux rangées **(R1, R2)** en quinconce.

5. Unité **(1)** de traitement selon l'une des revendications précédentes, **caractérisée en ce que** chaque émetteur **(7)** présente une largeur sensiblement égale ou supérieure à celle de la section **(15)** réfléchissante qui lui fait face.

6. Unité (1) de traitement selon l'une des revendications précédentes, **caractérisée en ce que** chaque paroi (3, 4) comprend une juxtaposition de modules (9) individuels comprenant chacun un émetteur (7) matriciel.

7. Unité (1) de traitement selon la revendication 5, **caractérisée en ce que**, pour un intervalle donné entre deux émetteurs (7) adjacents, les émetteurs (7) de la deuxième paroi (4) sont décalés, par rapport à ceux de la première paroi (3), d'un demi-intervalle augmenté ou diminué d'une demi-largeur de réflecteur (10).

8. Unité (1) de traitement selon l'une des revendications 1 à 5, **caractérisé en ce que**, pour un intervalle donné entre deux émetteurs (7) adjacents, les émetteurs (7) de la deuxième paroi (4) sont décalés, par rapport à ceux de la première paroi (3), d'un demi-intervalle.

9. Unité (1) de traitement selon l'une des revendications précédentes, **caractérisée en ce que** les sources de rayonnement sont des lasers, de préférence des diodes laser de type VCSEL.

## Patentansprüche

1. Einheit (1) zur Bearbeitung von Rohlingen (2) von Hohlkörpern aus Kunststoff, die einen Raum (5) enthält, der mit zwei gegenüberliegenden Wänden (3, 4) ausgestattet ist, nämlich einer ersten Wand (3) und einer zweiten Wand (4) gegenüber der ersten Wand (3), die zusammen den Raum (5) definieren, in dem die Rohlinge (2) gemäß einem vorbestimmten Längspfad (T) vorbeilaufen, Einheit, bei der:
jede Wand (3, 4) eine Reihe von beabstandeten Emittern (7) aufweist, die je eine Vielzahl von Quellen monochromatischer oder pseudo-monochromatischer elektromagnetischer Strahlung enthalten,
ein reflektierender Abschnitt (15) sich in jedem Raum zwischen zwei benachbarten Emittern (7) erstreckt;
die Emitter (7) der zweiten Wand (4) in Längsrichtung bezüglich derjenigen der ersten Wand (3) versetzt sind, so dass die Emitter (7) jeder Wand (3, 4) sich vor einem reflektierenden Abschnitt (15) der gegenüberliegenden Wand befinden;
jeder Emitter (7) in ein einzelnes Heizmodul (9) integriert ist, das einen den Emitter (7) umrandenden gelochten Reflektor (10) enthält.

2. Bearbeitungseinheit nach Anspruch 1, **dadurch gekennzeichnet, dass** die Heizmodule (9) so aneinandergrenzen, dass die Reflektoren (10) von zwei benachbarten Modulen (9) stumpf aneinandergefügt sind, ohne Zwischenraum zwischen den Reflektoren (10), oder mit einem minimalen Zwischenraum, der gerade ausreicht, um eine mögliche Ausdehnung der Reflektoren (10) beim Betrieb der Bearbeitungseinheit (1) abhängig von den erfahrenen Wärmezyklen zu erlauben.

3. Bearbeitungseinheit nach Anspruch 1 oder 2, **dadurch gekennzeichnet, dass** sie Einrichtungen zum Antrieb der Rohlinge (2) über mindestens zwei parallele Reihen (R1, R2) innerhalb des Raums (5) enthält.

4. Bearbeitungseinheit nach Anspruch 3, **dadurch gekennzeichnet, dass** sie Einrichtungen zum Antrieb der Rohlinge (2) über mindestens zwei auf Lücke angeordnete Reihen (R1, R2) enthält.

5. Bearbeitungseinheit (1) nach einem der vorhergehenden Ansprüche, **dadurch gekennzeichnet, dass** jeder Emitter (7) eine Breite aufweist, die im Wesentlich gleich derjenigen oder größer als die des reflektierenden Abschnitts (15) ist, der ihm gegenüber liegt.

6. Bearbeitungseinheit (1) nach einem der vorhergehenden Ansprüche, **dadurch gekennzeichnet, dass** jede Wand (3, 4) eine Aneinanderreihung von einzelnen Modulen (9) enthält, die je einen Matrixemitter (7) enthalten.

7. Bearbeitungseinheit (1) nach Anspruch 5, **dadurch gekennzeichnet, dass** für einen gegebenen Zwischenraum zwischen zwei benachbarten Emittern (7) die Emitter (7) der zweiten Wand (4) bezüglich derjenigen der ersten Wand (3) um einen halben Zwischenraum versetzt sind, der um eine halbe Reflektorbreite (10) vergrößert oder verkleinert ist.

8. Bearbeitungseinheit (1) nach einem der Ansprüche 1 bis 5, **dadurch gekennzeichnet, dass** für einen gegebenen Zwischenraum zwischen zwei benachbarten Emittern (7) die Emitter (7) der zweiten Wand (4) bezüglich derjenigen der ersten Wand (3) um einen halben Zwischenraum versetzt sind.

9. Bearbeitungseinheit (1) nach einem der vorhergehenden Ansprüche, **dadurch gekennzeichnet, dass** die Strahlungsquellen Laser sind, vorzugsweise Laserdioden des Typ VCSEL.

## Claims

1. Unit (1) for treating preforms (2) of hollow bodies made of plastic material, comprising a chamber (5) provided with two opposing walls (3, 4), namely a first wall (3) and a second wall (4) facing the first wall (3), which together define the chamber (5) through which the preforms (2) run along a predetermined longitudinal path (T), a unit in which:
each wall (3, 4) comprises a series of spaced-apart emitters (7) each comprising a plurality of monochromatic or pseudo-monochromatic electromagnetic radiating sources,
a reflecting section (15) extends in each space between two adjacent emitters (7);
the emitters (7) of the second wall (4) are offset longitudinally relative to those of the first wall (3), so that the emitters (7) of each wall (3, 4) face a reflecting section (15) of the opposing wall;
each emitter (7) is incorporated in an individual heating module (9) which comprises an openwork reflector (10) framing the emitter (7).

2. Treatment unit according to Claim 1, **characterized in that** the heating modules (9) are juxtaposed so that the reflectors (10) of two adjacent modules (9) abut, without a gap between the reflectors (10), or with a minimal gap that is just sufficient to allow a possible expansion of the reflectors (10) when the treatment unit (1) is operating, according to the thermal cycles undergone.

3. Treatment unit according to Claim 1 or 2, **characterized in that** it comprises means for driving the preforms (2) on at least two parallel rows (R1, R2) within the enclosure (5).

4. Treatment unit according to Claim 3, **characterized in that** it comprises means for driving the preforms (2) on two staggered rows (R1, R2).

5. Treatment unit (1) according to one of the preceding claims, **characterized in that** each emitter (7) has a width substantially equal to or greater than that of the reflecting section (15) which faces it.

6. Treatment unit (1) according to one of the preceding claims, **characterized in that** each wall (3, 4) comprises a juxtaposition of individual modules (9) each comprising a matrix emitter (7).

7. Treatment unit (1) according to Claim 5, **characterized in that**, for a given interval between two adjacent emitters (7), the emitters (7) of the second wall (4) are offset, relative to those of the first wall (3), by a half-interval plus or minus a half-width of reflector (10).

8. Treatment unit (1) according to one of Claims 1 to 5, **characterized in that**, for a given interval between two adjacent emitters (7), the emitters (7) of the second wall (4) are offset, relative to those of the first wall (3), by a half-interval.

9. Treatment unit (1) according to one of the preceding claims, **characterized in that** the radiation sources are lasers, preferably laser diodes of VCSEL type.
